(19) Europäisches Patentamt
European Patent Office
Office européen des brevets

(11) EP 2 568 009 B1

(12) **EUROPEAN PATENT SPECIFICATION**

(45) Date of publication and mention of the grant of the patent:
**21.12.2016 Bulletin 2016/51**

(21) Application number: **11820021.1**

(22) Date of filing: **25.08.2011**

(51) Int Cl.:
***C08L 27/16*** *(2006.01)* ***C08K 3/04*** *(2006.01)*
***C08K 5/14*** *(2006.01)* ***C08J 5/00*** *(2006.01)*

(86) International application number:
**PCT/JP2011/069236**

(87) International publication number:
**WO 2012/026559 (01.03.2012 Gazette 2012/09)**

# (54) FLUORORUBBER MOLDED ARTICLE

FLUORKAUTSCHUKFORMARTIKEL

ARTICLE MOULÉ EN CAOUTCHOUC FLUORÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.08.2010 US 376990 P**

(43) Date of publication of application:
**13.03.2013 Bulletin 2013/11**

(73) Proprietor: **Daikin Industries, Ltd.**
**Osaka 530-8323 (JP)**

(72) Inventors:
- **OTA, Daisuke**
  **Osaka-shi**
  **Osaka 530-8323 (JP)**
- **TERADA, Junpei**
  **Osaka-shi**
  **Osaka 530-8323 (JP)**
- **KITAICHI, Masanori**
  **Osaka-shi**
  **Osaka 530-8323 (JP)**
- **UETA, Yutaka**
  **Osaka-shi**
  **Osaka 530-8323 (JP)**
- **MORITA. Shigeru**
  **Osaka-shi**
  **Osaka 530-8323 (JP)**
- **KAWASAKI, Kazuyoshi**
  **Osaka-shi**
  **Osaka 530-8323 (JP)**
- **MORIKAWA, Tatsuya**
  **Osaka-shi**
  **Osaka 530-8323 (JP)**
- **FUKUOKA, Shoji**
  **Osaka-shi**
  **Osaka 530-8323 (JP)**

(74) Representative: **Hoffmann Eitle**
**Patent- und Rechtsanwälte PartmbB**
**Arabellastraße 30**
**81925 München (DE)**

(56) References cited:
**EP-A1- 0 634 456** **EP-A1- 0 743 329**
**EP-A1- 2 108 666** **JP-A- 3 122 153**
**JP-A- 2003 013 041**

Remarks:
The file contains technical information submitted after the application was filed and not included in this specification

EP 2 568 009 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to a fluororubber formed product having excellent mechanical properties at high temperatures.

### BACKGROUND ART

Fluororubbers are known to be excellent in chemical resistance, oil resistance, and heat resistance, and also to have good compression set resistance at high temperatures. Fluororubbers are now desired to have better mechanical properties at high temperatures, such as strength at high temperature and elongation at high temperature. For example, when a cross-linked fluororubber product is used at as high temperature as more than 100°C, the product is required to have excellent mechanical properties at high temperatures as well as heat resistance, for high durability.

In terms of an increase in the compression set resistance, for example, compositions such as one taught in Patent Document 1 have been proposed. Those compositions, however, have low elongation at room temperature, and therefore will probably have even lower elongation at high temperature. The composition described in Patent Document 2 has higher elongation at high temperature, but does not have resistance to more severe use environment. The combination of a fluororubber and a thermoplastic fluoroelastomer as disclosed in Patent Document 3 is an example with higher strength at high temperatures, but the elongation at room temperature of this composition is low, and therefore the elongation at high temperature will probably be even lower.

EP 0 743 329 A1 discloses compositions and formed productscomprising peroxide crosslinked compositions comprising fluororubbers and carbon black. JPH 03 122153 A discloses fluororubbers having increased strength and heat, chemical and oil resistance, that are prepared using carbon black having higher N2SA, 2 as shown in a comparison using carbon black SEAST 116 of 119 m / 2 g $N_2SA$ instead of carbon black SEAST S having 27 m /g $N_2SA$.

Patent Document 1: JP S60-55050 A
Patent Document 2: JP 2008-184496 A
Patent Document 3: JP H06-25500 A

### SUMMARY OF THE INVENTION

### PROBLEMS TO BE SOLVED BY THE INVENTION

The present invention aims to provide a fluororubber formed product having excellent heat resistance and excellent mechanical properties at high temperatures.

### MEANS FOR SOLVING THE PROBLEMS

The present invention relates to a formed product, according to claim 1, comprising a cross-linked fluororubber product obtainable by cross-linking a fluororubber composition containing a fluororubber (A) and a carbon black (B), the fluororubber (A) being a vinylidene fluoride fluororubber including 48 to 88 mol% of a structural unit derived from vinylidene fluoride and 0 to 10 mol% of a structural unit derived from tetrafluoroethylene relative to the total amount 100 mol% of structural units derived from all monomer components, and
the cross-linked fluororubber product having a loss modulus E" of 400 kPa or higher and 6,000 kPa or lower determined by a dynamic viscoelasticity test under conditions of measurement temperature: 160°C, tensile strain: 1%, initial force: 157 cN, and frequency: 10 Hz.

The present invention also relates to a fluororubber composition, according to claim 5, comprising a fluororubber (A) and a carbon black (B), the fluororubber (A) being a vinylidene fluoride fluororubber including 48 to 88 mol% of a structural unit derived from vinylidene fluoride and 0 to 10 mol% of a structural unit derived from tetrafluoroethylene relative to the total amount 100 mol% of structural units derived from all monomer components, and
the fluororubber composition before cross-linking having a difference $\delta G'$ ($G'(1\%) - G'(100\%)$) of 120 kPa or higher and 3,000 kPa or lower, the difference being determined by subtracting the shear modulus $G'(100\%)$ at 100% dynamic strain from the shear modulus $G'(1\%)$ at 1% dynamic strain in a dynamic viscoelasticity test with a rubber process analyzer (RPA) under conditions of measurement frequency: 1 Hz, and measurement temperature: 100°C.

EFFECT OF THE INVENTION

The present invention can provide a fluororubber formed product having excellent heat resistance and excellent mechanical properties at high temperatures.

MODES FOR CARRYING OUT THE INVENTION

The formed product of the present invention includes a cross-linked fluororubber product obtainable by cross-linking a fluororubber composition containing a fluororubber (A) and a carbon black (B).
The fluororubber (A) is a vinylidene fluoride fluororubber including: 48 to 88 mol% of a structural unit derived from vinylidene fluoride and 0 to 10 mol% of a structural unit derived from tetrafluoroethylene relative to the total amount 100 mol% of structural units derived from all monomer components.
The cross-linked fluororubber product has a loss modulus E" of 400 kPa or higher and 6,000 kPa or lower determined by a dynamic viscoelasticity test (measurement temperature: 160°C, tensile strain: 1%, initial force: 157 cN, and frequency: 10 Hz).
Each of the elements will be described hereinbelow.

(A) Fluororubber

The fluororubber (A) used in the present invention is a vinylidene fluoride fluororubber (VdF rubber) including 48 to 88 mol% of a structural unit (VdF unit) derived from vinylidene fluoride (VdF) relative to the total amount 100 mol% of structural units derived from all monomer components used for forming the fluororubber (A). If the vinylidene fluoride fluororubber (VdF rubber) has a structural unit (TFE unit) derived from tetrafluoroethylene, the content thereof is 10 mol% or less. The amount of the VdF unit is preferably 70 to 85 mol%, and more preferably 75 to 85 mol%. The amount of the TFE unit is preferably 0 to 3 mol%. The fluororubber (A) may include structural units other than the VdF unit and the TFE unit. The amount of structural units other than the VdF unit and the TFE unit is 2 to 52 mol% relative to the total amount 100 mol% of structural units derived from all monomer components used for forming the fluororubber (A).
The fluororubber (A) having the above-mentioned composition is easily mixed. Therefore, as mentioned below, the fluororubber (A) can be mixed with the carbon black components at a relatively low average shear rate to provide a fluororubber composition. From the fluororubber composition, a cross-linked fluororubber product having a desired normal state at room temperature and mechanical properties at high temperatures can be provided.
Any VdF rubbers can be used which have 48 to 88 mol% of a structural unit derived from VdF and 10 mol% or less of a structural unit derived from tetrafluoroethylene relative to the total amount 100 mol% of structural units derived from all monomer components used for forming the fluororubber (A). Any comonomers may be used in the VdF rubber as long as they are copolymerizable with VdF. Examples thereof include fluorine-containing monomers such as hexafluoropropylene (HFP), perfluoro(alkyl vinyl ether) (PAVE), and a fluorine-containing monomer (1) represented by formula (1):

$$CH_2{=}CFR_f \qquad (1)$$

wherein $R_f$ is a C1-C12 linear or branched fluoroalkyl group. Each of these monomers and compounds may be used alone, or two or more of these may be used in combination.
The PAVE is preferably perfluoro(methyl vinyl ether) (PMVE) or perfluoro(propyl vinyl ether) (PPVE), and is particularly preferably PMVE.
The comonomer may be a perfluorovinyl ether represented by the formula (2): $CF_2{=}CFOCF_2OR_f^1$ (2) wherein $R_f^1$ is a C1-C6 linear or branched perfluoroalkyl group, a C5-C6 cyclic perfluoroalkyl group, or a C2-C6 linear or branched perfluorooxyalkyl group having 1 to 3 oxygen atoms. The comonomer is preferably $CF_2{=}CFOCF_2OCF_3$, $CF_2{=}CFOCF_2OCF_2CF_3$, or $CF_2{=}CFOCF_2OCF_2CF_2OCF_3$.
The fluorine-containing monomer (1) of formula (1) is preferably a monomer whose $R_f$ is a linear fluoroalkyl group, and more preferably a monomer whose $R_f$ is a linear perfluoroalkyl group. The carbon number of $R_f$ is preferably 1 to 6. Examples of the fluorine-containing monomer (1) of formula (1) include $CH_2{=}CFCF_3$, $CH_2{=}CFCF_2CF_3$, $CH_2{=}CFCF_2CF_2CF_3$, and $CH_2{=}CFCF_2CF_2CF_2CF_3$- Preferable among these is 2,3,3,3-tetrafluoropropylene represented as $CH_2{=}CFCF_3$.
The VdF rubber is preferably VdF/HFP copolymer, a copolymer of VdF/ fluorine-containing monomer (1) of formula (1) or VdF/PAVE copolymer.
In the VdF/HFP copolymer, the mol% ratio of the VdF/HFP is preferably 48/52 to 85/15, more preferably 50/50 to 78/22, and further preferably 55/45 to 77/23.
In the VdF/PAVE copolymer, the mol% ratio of the VdF/PAVE is preferably 88/12 to 48/52, more preferably

85/15 to 70/30, and particularly preferably 85/15 to 75/25.

In the copolymer based on VdF/ fluorine-containing monomer (1) of formula (1), the mol% ratio of the VdF/ fluorine-containing monomer (1) units is preferably 88/12 to 48/52, and the amount of monomer units other than the VdF and fluorine-containing monomer (1) units is preferably 0 to 10 mol% of all monomer units. The mol% ratio of the VdF/ fluorine-containing monomer (1) units is more preferably 85/15 to 70/30, and particularly preferably 85/15 to 75/25. The monomers other than the VdF and fluorine-containing monomer (1) are preferably the monomers listed above as the comonomers for VdF, such as TFE, HFP, PMVE, perfluoroethyl vinyl ether (PEVE), PPVE. More preferable among these are PMVE, HFP, and TFE (in this case, the TFE content is 0 to 10 mol%, and preferably 0 to 3 mol%). Each of these monomers and compounds may be used alone, or two or more of these may be used in combination.

The fluororubber (A) preferably has a number average molecular weight Mn of 5,000 to 500,000, more preferably 10,000 to 500,000, and particularly preferably 20,000 to 500,000.

The above-described fluororubber (A) may be produced by a common method such as emulsion polymerization, suspension polymerization, or solution polymerization. In particular, a polymerization method using an iodine (bromine) compound, which is known as iodine (bromine) transfer polymerization, can provide a fluororubber having a narrow molecular weight distribution.

In order to provide a fluororubber composition having a low viscosity, for example, other species of fluororubbers may be blended with the fluororubber (A). Examples of other fluororubbers include low molecular weight liquid fluororubbers (number average molecular weight: 1,000 or more), low molecular weight fluororubbers having a number average molecular weight of about 10,000, and fluororubbers having a number average molecular weight of about 100,000 to about 200,000.

The listed monomers in the above fluororubber are examples of the main monomers of the rubber, and the main monomers may be suitably copolymerized with monomers giving a cross-linkable group. The monomer giving a cross-linkable group may be any monomer which can provide a suitable cross-linkable group depending on the production method and the cross-link system. Examples thereof include known polymerizable compounds and chain transfer agents which have an iodine atom, bromine atom, carbon-carbon double bond, cyano group, carboxyl group, hydroxyl group, amino group, ester group.

Preferable examples of the monomer giving a cross-linkable group include a compound represented by formula (3) :

$$CY^1_2=CY^2R_f^2X^1 \qquad (3)$$

wherein $Y^1$ and $Y^2$ may be the same as or different from each other and each of these is a fluorine atom, hydrogen atom, or $-CH_3$; $R_f^2$ is a linear or branched fluoroalkylene group which may have one or more ethereal oxygen atoms and which may have one or more aromatic rings, and in which part or all of the hydrogen atoms are replaced by fluorine atoms; and $X^1$ is an iodine atom or a bromine atom. Specific examples thereof include: iodine-containing monomers and bromine-containing monomers represented by formula (4):

$$CY^1_2=CY^2R_f^3CHR^1\text{-}X^1 \qquad (4)$$

wherein $Y^1$, $Y^2$, and $X^1$ each are the same as defined above, $R_f^3$ is a linear or branched fluoroalkylene group which may have one or more ethereal oxygen atoms and in which part or all of the hydrogen atoms are replaced by fluorine atoms, i.e., $R_f^3$ is a linear or branched fluoroalkylene group in which part or all of the hydrogen atoms are replaced by fluorine atoms, a linear or branched fluorooxyalkylene group in which part or all of the hydrogen atoms are replaced by fluorine atoms, or a linear or branched fluoropolyoxyalkylene group in which part or all of the hydrogen atoms are replaced by fluorine atoms, and $R^1$ is a hydrogen atom or a methyl group; and iodine-containing monomers and bromine-containing monomers represented by formulas (5) to (22):

$$CY^4_2=CY^4(CF_2)_n\text{-}X^1 \qquad (5)$$

wherein $Y^4$s may be the same as or different from each other, and each of these is a hydrogen atom or a fluorine atom, and n is an integer of 1 to 8;

$$CF_2=CFCF_2R_f^4\text{-}X^1 \qquad (6)$$

wherein

$R_f^4$ is $\{OCF_2\}_n$, $\{OCF(CF_3)\}_n$

and n is an integer of 0 to 5;

$CF_2$=$CFCF_2$ $(OCF(CF_3)CF_2)_m$, $(OCH_2CF_2CF_2)_nOCH_2CF_2$-$X^1$ (7) wherein m is an integer of 0 to 5, and n is an integer of 0 to 5;

$CF_2$=$CFCF_2$ $(OCH_2CF_2CF_2)_m(OCF(CF_3)CF_2)_nOCF((CF_3)$-$X^1$ (8) wherein m is an integer of 0 to 5, and n is an integer of 0 to 5;

$CF_2$=$CF(OCF_2CF(CF_3))_mO(CF_2)_n$-$X^1$ (9)

wherein m is an integer of 0 to 5, and n is an integer of 1 to 8;

$CF_2$=$CF(OCF_2CF(CF_3))_m$-$X^1$ (10)

wherein m is an integer of 1 to 5;

$CF_2$=$CFOCF_2(CF(CF_3)OCF_2)_nC$ (-$X^1$)$CF_3$ (11)

wherein n is an integer of 1 to 4;

$CF_2$=$CFO(CF_2)_nOCF(CF_3)$-$X^-$ (12)

wherein n is an integer of 2 to 5;

$CF_2$=$CFO(CF_2)_n$-$(C_6H_4)$-$X^1$ (13)

wherein n is an integer of 1 to 6;

$CF_2$=$CF(OCF_2CF(CF_3))_nOCF_2CF(CF_3)$-$X^1$ (14)

wherein n is an integer of 1 or 2;

$CH_2$=$CFCF_2O(CF(CF_3)CF_2O)_nCF(CF_3)$-$X^1$ (15)

wherein n is an integer of 0 to 5;

$CF_2$=$CFO(CF_2CF(CF_3)O)_m(CF_2)_n$-$X^1$ (16)

wherein m is an integer of 0 to 5, and n is an integer of 1 to 3;

$CH_2$=$CFCF_2OCF(CF_3)$ $OCF(CF_3)$-$X^1$ (17);

$CH_2$=$CFCF_2OCH_2CF_2$-$X^1$ (18);

$CF_2$=$CFO(CF_2CF(CF_3)O)_mCF_2CF(CF_3)$-$_X{}^1$ (19)

wherein m is an integer of 0 or greater;

$CF_2$=$CFOCF(CF_3)CF_2O(CF_2)_n$-$X^1$ (20)

wherein n is an integer of 1 or greater;

$CF_2$=$CFOCF_2OCF_2CF(CF_3)OCF_2$-$X^1$ (21);

$CH_2$=$CH$-$(CF_2)_nX^1$ (22)

wherein n is an integer of 2 to 8,
in formulas (5) to (22) $X^1$ is the same as defined above. Each of the monomers may be used alone, or any of these may be used in combination.

The iodine-containing monomer or the bromine-containing monomer represented by formula (4) is preferably an iodine-containing fluorinated vinyl ether represented by formula (23):

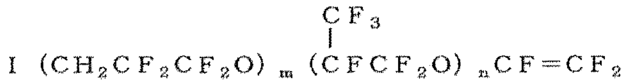

(23)

wherein m is an integer of 1 to 5, and n is an integer of 0 to 3. More specific examples thereof include the following monomers.

$I\,CH_2CF_2CF_2OCF{=}CF_2$, $I\,(CH_2CF_2CF_2O)_2CF{=}CF_2$,

$I\,(CH_2CF_2CF_2O)_3CF{=}CF_2$,

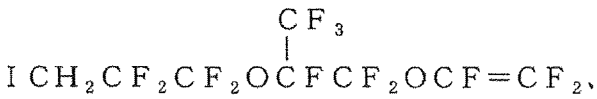

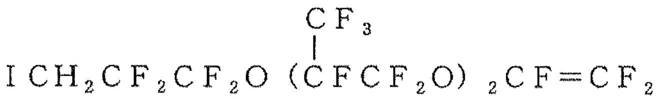

Preferable among these is $ICH_2CF_2CF_2OCF{=}CF_2$.

More specifically, preferable examples of the iodine-containing monomer and the bromine-containing monomer represented by formula (5) include $ICF_2CF_2CF{=}CH_2$ and $I\,(CF_2CF_2)\,_2CF{=}CH_2$.

More specifically, preferable examples of the iodine-containing monomer and the bromine-containing monomer represented by formula (9) include $I\,(CF_2CF_2)\,_20CF{=}CF_2$.

More specifically, preferable examples of the iodine-containing monomer and the bromine-containing monomer represented by formula (22) include $CH_2{=}CHCF_2CF_2I$ and $I\,(CF_2CF_2)_2CH{=}CH_2$.

Further, a bisolefin compound represented by formula:

$$R^2R^3C{=}CR^4\text{-}Z\text{-}CR^5{=}CR^6R^7$$

wherein $R^2$, $R^3$, $R^4$, $R^5$, $R^6$, and $R^7$ may be the same as or different from each other, and each of these is H or a C1-C5 alkyl group; Z is a C1-C18 linear or branched alkylene or cycloalkylene group which may have an oxygen atom and is preferably at least partially fluorinated, or a (per)fluoropolyoxyalkylene group, is also preferable as a monomer giving a cross-linkable group. The term "(per)fluoropolyoxyalkylene group" herein means a fluoropolyoxyalkylene group or a perfluoropolyoxyalkylene group.

Z is preferably a C4-C12 (per)fluoroalkylene group, and $R^2$, $R^3$, $R^4$, $R^5$, $R^6$, and $R^7$ each are preferably a hydrogen atom.

In the case that Z is a (per)fluoropolyoxyalkylene group, it is preferably a (per)fluoropolyoxyalkylene group represented by formula:

$$-\,(Q)_p\text{-}CF_2O\text{-}(CF_2CF_2O)\text{-}(CF_2O)\text{-}CF_2\text{-}(Q)_p\text{-}$$

wherein Q isOa C1-C10 alkylene group or a C2-C10 oxyalkylene group; p is 0 or 1; and m and n are integers which give an m/n ratio of 0.2 to 5 and a molecular weight of the (per)fluoropolyoxyalkylene group of 500 to 10,000, and preferably 1,000 to 4,000. In this formula, Q is preferably selected from $-CH_2OCH_2-$ and $-CH_2O(CH_2CH_2O)_sCH_2-$wherein s = 1 to 3.

Preferable examples of the bisolefin include $CH_2{=}CH\text{-}(CF_2)_4\text{-}CH{=}CH_2$, $CH_2{=}CH\text{-}\ (CF_2)_6\text{-}CH{=}CH_2$, and those represented by formula:

$$CH_2{=}CH\text{-}Z^1\text{-}CH{=}CH_2$$

wherein $Z^1$ is $-CH_2OCH_2\text{-}CF_2O\text{-}(CF_2CF_2O)_m\text{-}(CF_2O)_n\text{-}CF_2\text{-}CH_2OCH_2-$ wherein m/n is 0.5.

Preferable among these is 3,3,4,4,5,5,6,6,7,7,8,8-dodecafluoro-1,9-decadiene represented as

$CH_2=CH-(CF_2)_6-CH=CH_2$.

From the viewpoint of processability, the fluororubber (A) preferably has a Mooney viscosity at 100°C of within a range of 20 to 200, and further preferably 30 to 180. The Mooney viscosity is measured in accordance with ASTM-D1646 and JIS K 6300.

(B) Carbon black

In the present invention, the carbon black (B) is not particularly limited as long as it is a carbon black providing the loss modulus E" in the above range and further preferably the storage modulus E' in the after-mentioned range.

Examples of such a carbon black include furnace black, acetylene black, thermal black, channel black, and graphite. Specific examples thereof include SAF-HS ($N_2SA$: 142 $m^2/g$, DBP: 130 ml/100 g), SAF ($N_2SA$: 142 $m^2/g$, DBP: 115 ml/100 g), N234 ($N_2SA$: 126 $m^2/g$, DBP: 125 ml/100 g), ISAF ($N_2SA$: 119 $m^2/g$, DBP: 114 ml/100 g), ISAF-LS ($N_2SA$: 106 $m^2/g$, DBP: 75 ml/100 g), ISAF-HS ($N_2SA$: 99 $m^2/g$, DBP: 129 ml/100 g), N339 ($N_2SA$: 93 $m^2/g$, DBP: 119 ml/100 g), HAF-LS ($N_2SA$: 84 $m^2/g$, DBP: 75 ml/100 g), HAS-HS ($N_2SA$: 82 $m^2/g$, DBP: 126 ml/100 g), HAF ($N_2SA$: 79 $m^2/g$, DBP: 101 ml/100 g), N351 ($N_2SA$: 74 $m^2/g$, DBP: 127 ml/100 g), LI-HAF ($N_2SA$: 74 $m^2/g$, DBP: 101 ml/100 g), MAF-HS ($N_2SA$: 56 $m^2/g$, DBP: 158 ml/100 g), MAF ($N_2SA$: 49 $m^2/g$, DBP: 133 ml/100 g), FEF-HS ($N_2SA$: 42 $m^2/g$, DBP: 160 ml/100 g), FEF ($N_2SA$: 42 $m^2/g$, DBP: 115 ml/100 g), SRF-HS ($N_2SA$: 32 $m^2/g$, DBP: 140 ml/100 g), SRF-HS ($N_2SA$: 29 $m^2/g$, DBP: 152 ml/100 g), GPF ($N_2SA$: 27 $m^2/g$, DBP: 87 ml/100 g), SRF ($N_2SA$: 27 $m^2/g$, DBP: 68 ml/100 g), SRF-LS ($N_2SA$: 23 $m^2/g$, DBP: 51 ml/100 g), FT ($N_2SA$: 19 $m^2/g$, DBP: 42 ml/100 g), and MT ($N_2SA$: 8 $m^2/g$, DBP: 43 ml/100 g). Each of these carbon blacks may be used alone, or two or more of these may be used in combination.

The carbon black is a carbon black having a nitrogen adsorption specific surface area ($N_2SA$) of 10 to 180 $m^2/g$ and a dibutyl phthalate (DBP) oil absorption of 40 to 180 ml/100 g. If a carbon black used has high $N_2SA$ and/or DBP values, the values of the loss modulus E" and the storage modulus E' will be high.

If a carbon black having a nitrogen adsorption specific surface area ($N_2SA$) smaller than 5 $m^2/g$ is mixed into the rubber, the mechanical properties of the rubber tend to be poor. From this viewpoint, the nitrogen adsorption specific surface area ($N_2SA$) is 10 $m^2/g$ or larger, preferably 20 $m^2/g$ or larger, and more preferably 25 $m^2/g$ or larger. The upper limit thereof is 180 $m^2/g$ because of the generally easy availability.

If a carbon black having a dibutyl phthalate (DBP) oil absorption of smaller than 40 ml/100 g is mixed into the rubber, the mechanical properties of the rubber tend to be poor. From this viewpoint, the DBP oil absorption is preferably 50 ml/100 g or higher, further preferably 60 ml/100 g or higher, and particularly preferably 80 ml/100 g or higher. The upper limit thereof is preferably 175 ml/100 g, and further preferably 170 ml/100 g because of the generally easy availability.

The amount of the carbon black (B) is preferably 5 to 65 parts by mass relative to 100 parts by mass of the fluororubber (A). Too large or too small an amount of the carbon black (B) tends to cause poor mechanical properties of a cross-linked product. Further, for good balance of physical properties, the amount thereof is preferably 6 parts by mass or more, and more preferably 10 parts by mass or more, but preferably 55 parts by mass or less, more preferably 50 parts by mass or less, further preferably 49 parts by mass or less, and particularly preferably 45 parts by mass or less, relative to 100 parts by mass of the fluororubber (A).

In order to obtain the formed product of the present invention, a fluororubber composition is suitably used that has a difference $\delta G'$ ($G'$ (1%) - $G'$(100%)) between the shear modulus $G'$ (1%) at 1% dynamic strain and the shear modulus $G'$ (100%) at 100% dynamic strain of 120 kPa or higher and 3,000 kPa or lower determined by a dynamic viscoelasticity test (measurement temperature: 100°C, measurement frequency: 1 Hz) with a rubber process analyzer (RPA) before cross-linked.

The difference $\delta G'$ is used as a standard for evaluating the property of reinforcement of the rubber composition, and it is determined by a dynamic viscoelasticity test with a rubber process analyzer.

The fluororubber composition having a difference $\delta G'$ in the range of 120 kPa or higher and 3,000 kPa or lower is advantageous for a good normal state at room temperature, mechanical properties at high temperatures, and the like.

The difference $\delta G'$ is preferably 150 kPa or higher, and further preferably 160 kPa or higher, for a good normal state at room temperature, mechanical properties at high temperatures, and the like. In contrast, it is preferably 2,800 kPa or lower, and further preferably 2,500 kPa or lower, for a good normal state at room temperature, hardness, viscosity upon extrusion molding, mechanical properties at high temperatures.

The fluororubber composition having a difference $\delta G'$ of 120 kPa or higher and 3,000 kPa or lower may be prepared using a mixer or a roll mixer, for example.

More specifically, the following methods may be adopted; the method is not limited to these methods.

(1) A method in which predetermined amounts of a fluororubber (A) and a carbon black (B), and if necessary an organic amine compound and/or an acid acceptor, mentioned below, are charged into an internal mixer, and then mixed at an average shear rate of a rotor of 20 to 1,000 (1/second), preferably 50 to 1,000 (1/second), more preferably

100 to 1,000 (1/second), and further preferably 200 to 1,000 (1/second) so that the maximum mixing temperature Tm is 80°C to 220°C (preferably 120°C to 200°C) (in other words, mixing is preferably carried out under the condition that a mixed product has a highest temperature Tm of 80°C to 220°C while being mixed and being discharged. The same applies below). Examples of the internal mixer include a pressurizing kneader, Banbury mixer, single screw mixer, and twin screw mixer.

(2) A method in which predetermined amounts of a fluororubber (A) and a carbon black (B), and if necessary an organic amine compound and/or an acid acceptor, mentioned below, are charged into a roll mixer, and then mixed under the conditions that the average shear rate of a rotor is 20 (1/second) or higher and preferably 50 (1/second) or higher, and the maximum mixing temperature Tm is 80°C to 220°C (preferably, 120°C to 200°C).

The fluororubber compositions obtained by the above methods (1) and (2) are free from components such as a cross-linking agent (C) and a cross-linking accelerator (D). Further, the mixing of the methods (1) and (2) may be performed multiple times. In the case of performing the mixing multiple times, the mixing conditions of the second and subsequent mixing may be the same as those in the methods (1) and (2) except that the maximum mixing temperature Tm is 140°C or lower.

One example of the method for preparing a cross-linkable fluororubber composition used in the present invention is a method in which the fluororubber composition obtained in the method (1) or (2) or by repeating the method (1) or (2) multiple times, is further blend-mixed with a cross-linking agent (C) and/or a cross-linking accelerator (D).

The cross-linking agent (C) and the cross-linking accelerator (D) may be blend-mixed at the same time, or the cross-linking accelerator (D) may be first blend-mixed and then the cross-linking agent (C) may be blend-mixed. The conditions for mixing the cross-linking agent (C) and the cross-linking accelerator (D) may be the same as those in the methods (1) and (2) except that the maximum mixing temperature Tm is 130°C or lower.

Another example of the method for preparing a cross-linkable fluororubber composition is a method in which predetermined amounts of a fluororubber (A), a carbon black (B), a cross-linking agent (C), and/or a cross-linking accelerator (D) are charged into a roll mixer in an appropriate order, and then mixed under the conditions that the average shear rate of a rotor is 20 (1/second) or higher and preferably 50 (1/second) or higher, and the maximum mixing temperature Tm is 130°C or lower.

The range of the difference δG' is preferably satisfied in the fluororubber composition before mixed with a cross-linking agent (C) and/or a cross-linking accelerator (D). Further, the difference δG' is also preferably within the above range even in the fluororubber composition containing a cross-linking agent (C) and/or a cross-linking accelerator (D).

In order to obtain a cross-linked fluororubber product having the aforementioned specific loss modulus E" and the after-mentioned storage modulus E', the average shear rate is preferably 20 (1/second) or higher, and more preferably 50 (1/second) or higher. An average shear rate of 20 (1/second) or higher provides a desired normal state at room temperature and mechanical properties at high temperatures.

The average shear rate (1/second) is calculated by the following formula.

$$\text{Average shear rate (1/second)} = (\pi \times D \times R)/(60\ \text{(seconds)} \times c)$$

wherein

D: rotor diameter or roll diameter (cm)
R: rotation rate (rpm)
c: tip clearance (cm, gap distance between rotor and casing or gap distance between rolls)

The cross-linking agent (C) and/or the cross-linking accelerator (D) may be appropriately selected depending on the cross-link system, the type of the fluororubber (A) to be cross-linked (e.g. composition of copolymer, presence of a cross-linkable group and the type thereof), the specific applications and the modes of a cross-linked product to be provided, the mixing conditions.

The cross-link system is a peroxide cross-link system,

(Peroxide cross-link system)

In the peroxide cross-link system, the cross-linking site has a carbon-carbon bond; thus, the system is superior in chemical resistance and steam resistance compared with the polyol cross-link system in which the cross-linking site has a carbon-oxygen bond and the polyamine cross-link system in which the cross-linking site has a carbon-nitrogen double bond.

The cross-linking agent of the peroxide cross-link system may be any peroxide capable of easily generating a peroxy radical in the presence of heat or a redox system. Specific examples thereof include organic peroxides such as 1,1-bis(t-butylperoxy)-3,5,5-trimethylcyclohexane, 2,5-dimethylhexane-2,5-dihydroperoxide, di-t-butyl peroxide, t-butylcumyl peroxide, dicumyl peroxide, $\alpha,\alpha$-bis(t-butylperoxy)-p-diisopropylbenzene, $\alpha,\alpha$-bis(t-butylperoxy)-m-diisopropylbenzene, $\alpha,\alpha$-bis(t-butylperoxy)-m-diisopropylbenzene, 2,5-dimethyl-2,5-di(t-butylperoxy)hexane, 2,5-dimethyl-2,5-di(t-butylperoxy)-hexyne-3, benzoyl peroxide, t-butylperoxybenzene, t-butylperoxybenzoate, t-butylperoxy maleic acid, and t-butylperoxyisopropyl carbonate. Preferable among these is 2,5-dimethyl-2,5-di(t-butylperoxy)hexane or 2,5-dimethyl-2,5-di(t-butylperoxy)-hexyne-3.

Further, in the peroxide cross-link system, it is preferable to use a cross-linking accelerator, in general. Examples of the cross-linking accelerator for peroxide cross-linking agents, especially organoperoxide cross-linking agents, include triallyl cyanurate, triallyl isocyanurate (TAIC), triacryl formal, triallyl trimellitate, N,N'-m-phenylene bismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, triallyl phosphite, N,N-diallylacrylamide, 1,6-divinyldodecafluorohexane, hexaallyl phosphoramide, N,N,N',N'-tetraallyl phthalamide, N,N,N',N'-tetraallyl malonamide, trivinyl isocyanurate, 2,4,6-trivinyl methyltrisiloxane, and tri(5-norbornene-2-methylene)cyanurate. Preferable among these is triallyl isocyanurate (TAIC) from the viewpoints of its cross-linkability and physical properties of cross-linked products.

From the viewpoint of cross-linkability, the fluororubber (A) suitable for the peroxide cross-link system is preferably a fluororubber having an iodine atom and/or a bromine atom as a cross-linking site. For good balance of physical properties, the amount of an iodine atom and/or a bromine atom is preferably 0.001 to 10% by mass, further preferably 0.01 to 5% by mass, and particularly preferably 0.1 to 3% by mass.

The amount of the peroxide cross-linking agent is preferably 0.01 to 10 parts by mass, more preferably 0.1 to 9 parts by mass, and particularly preferably 0.2 to 8 parts by mass, relative to 100 parts by mass of the fluororubber (A). If the amount of the peroxide cross-linking agent is less than 0.01 parts by mass, cross-linking of the fluororubber (A) tends to insufficiently proceed. In contrast, if the amount thereof is more than 10 parts by mass, the balance of physical properties tends to be poor.

Further, the amount of the cross-linking accelerator is generally 0.01 to 10 parts by mass, and preferably 0.1 to 9 parts by mass, relative to 100 parts by mass of the fluororubber (A). If the amount of the cross-linking accelerator is less than 0.01 parts by mass, undercure tends to be caused. In contrast, if the amount thereof is more than 10 parts by mass, cross-linking tends to proceed too rapidly, as well as cause poor balance of physical properties.

balance of physical properties tends to be poor.

In the present invention, the cross-link system is the peroxide cross-link system, using a suitable cross-linking agent (C) for the peroxide cross-link system.

If necessary, the fluororubber composition according to the present invention may further contain common additives for rubber such as filler, processing aid, plasticizer, colorant, tackifier, adhesion promoter, acid acceptor, pigment, flame retardant, lubricant, photo stabilizer, weather-resistant stabilizer, antistatic agent, ultraviolet absorber, antioxidant, mold release agent, foaming agent, perfume, oil, and softener, and other polymers such as polyethylene, polypropylene, polyamide, polyester, and polyurethane to the extent that the effects of the present invention are not deteriorated.

Examples of the filler include: metal oxides such as calcium oxide, titanium oxide, aluminum oxide, and magnesium oxide; metal hydroxides such as magnesium hydroxide, aluminum hydroxide, and calcium hydroxide; carbonates such as magnesium carbonate, aluminum carbonate, calcium carbonate, and barium carbonate; silicates such as magnesium silicate, calcium silicate, sodium silicate, and aluminum silicate; sulfates such as aluminum sulfate, calcium sulfate, and barium sulfate; synthesized hydrotalcite; metal sulfides such as molybdenum disulfide, iron sulfide, and copper sulfide; diatomaceous earth, asbestos, lithopone (zinc sulfide/barium sulfide), graphite, carbon fluoride, calcium fluoride, coke, fine particulate quartz, talc, powdery mica, Wollastonite, fibrous carbon, fibrous aramid, various whiskers, fibrous glass, organic reinforcing agent, organic filler, polytetrafluoroethylene, mica, silica, celite, and clay. Further, examples of the acid acceptor include calcium oxide, magnesium oxide, lead oxide, zinc oxide, magnesium hydroxide, calcium hydroxide, aluminum hydroxide, and hydrotalcite. Each of these may be used alone, or two or more of these may be appropriately used in combination. These may be added at any step in the aforementioned mixing method; they are preferably added upon mixing the fluororubber (A) and the carbon black (B) with an internal mixer or a roll mixer.

Examples of the processing aid include: higher fatty acids such as stearic acid, oleic acid, palmitic acid, and lauric acid; higher fatty acid salts such as sodium stearate and zinc stearate; higher fatty acid amides such as stearamide and oleamide; higher fatty acid esters such as ethyl oleate; petroleum wax such as carnauba wax and ceresin wax; polyglycols such as ethylene glycol, glycerine, and diethylene glycol; aliphatic hydrocarbons such as vaseline and paraffin; silicone oils, silicone polymers, low molecular weight polyethylenes, phthalic acid esters, phosphoric acid esters, rosin, (halogenated) dialkylamines, surfactants, sulfone compounds, fluorine-based processing aids, and organic amine compounds.

In particular, the organic amine compound and the acid acceptor are preferable additives because, in the case that they are blended upon mixing the fluororubber (A) and the carbon black (B) with an internal mixer or a roll mixer, they improve reinforceability. The mixing is preferably performed at a maximum mixing temperature Tm of 80°C to 220°C.

Preferable examples of the organic amine compound include primary amines represented as $R^1NH_2$, secondary amines represented as $R^1R^2NH$, and tertiary amines represented as $R^1R^2R^3N$. $R^1$, $R^2$, and $R^3$ may be the same as or different from each other and each of these is preferably a C1-C50 alkyl group. The alkyl group may have a benzene ring as a functional group, or may have a double bond and/or conjugated double bond. Further, the alkyl group may have a linear shape or a branched shape.

Examples of the primary amine include coconut amine, octyl amine, lauryl amine, stearyl amine, oleyl amine, beef tallow amine, 17-phenyl-heptadecylamine, octadeca-7,11-dienylamine, octadeca-7,9-dienylamine, octadec-9-enylamine, and 7-methyl-octadec-7-enylamine. Examples of the secondary amine include distearylamine. Examples of the tertiary amine include dimethyloctylamine, dimethyldecylamine, dimethyllaurylamine, dimethylmyristylamine, dimethylpalmitylamine, dimethylstearylamine, and dimethylbehenylamine. Particularly preferable are amines, especially primary amines, having about 20 carbon atoms because they are easily available and they improve reinforceability.

The amount of the organic amine compound is preferably 0.01 to 5 parts by mass relative to 100 parts by mass of the fluororubber (A). Too large an amount of the organic amine compound tends to cause difficulty in mixing, while too small an amount thereof tends to cause poor reinforceability. The amount with respect to 100 parts by mass of the fluororubber (A) is further preferably 0.1 parts by mass or more from the viewpoint of reinforceability and 4 parts by mass or less from the viewpoints of reinforceability and easy mixing.

The acid acceptor is preferably a metal hydroxide such as calcium hydroxide; a metal oxide such as magnesium oxide or zinc oxide; or hydrotalcite, for example, among the aforementioned examples from the viewpoint of reinforceability, and it is particularly preferably zinc oxide.

The amount of the acid acceptor is preferably 0.01 to 10 parts by mass relative to 100 parts by mass of the fluororubber (A). Too large an amount of the acid acceptor tends to cause poor physical properties, while too small an amount thereof tends to cause poor reinforceability. The amount with respect to 100 parts by mass of the fluororubber (A) is further preferably 0.1 parts by mass or more from the viewpoint of reinforceability, while it is preferably 8 parts by mass or less, and more preferably 5 parts by mass or less, from the viewpoints of physical properties and easy mixing.

In the present invention, the fluororubber composition may be cross-linked by an appropriately selected method. Examples of the method employed include common cross-linking methods such as cross-linking methods using a vulcanizing pan or the like. Also, Examples of the method include common molding methods such as extrusion and wrapped cure. If the fluororubber composition needs to be subjected to secondary curing depending on the intended use of a cross-linked product to be obtained, the composition may be secondarily cured in an oven.

The obtained cross-linked fluororubber product has a particularly excellent normal state at room temperature and mechanical properties at high temperatures in the case of having a loss modulus E" of 400 kPa or higher and 6,000 kPa or lower determined by a dynamic viscoelasticity test (measurement mode: tensile, chuck distance: 20 mm, tensile strain: 1%, frequency: 10 Hz, initial force: 157 cN, and measurement temperature: 160°C).

The lower limit thereof is preferably 420 kPa, and more preferably 430 kPa. The upper limit thereof is preferably 5,900 kPa, and more preferably 5,800 kPa.

For improved mechanical properties at high temperatures, the cross-linked fluororubber product further preferably has a storage modulus E' of 1,500 kPa or higher and 20,000 kPa or lower determined by a dynamic viscoelasticity test (measurement mode: tensile, chuck distance: 20 mm, measurement temperature: 160°C, tensile strain: 1%, initial force: 157 cN, and frequency: 10 Hz). The lower limit thereof is preferably 1,600 kPa, and more preferably 1,800 kPa, while the upper limit thereof is preferably 19,000 kPa, and more preferably 18,000 kPa.

The cross-linked fluororubber product preferably has an elongation at break at 160°C of 100 to 700%, more preferably 110% or higher, and particularly preferably 120% or higher, while preferably 680% or lower, and particularly preferably 650% or lower, because such a cross-linked product is suitably used under high-temperature conditions.

The cross-linked fluororubber product preferably has a tensile strength at break at 160°C of 1 MPa or higher, further preferably 1.5 MPa or higher, and particularly preferably 2 MPa or higher, while preferably 30 MPa or lower, and particularly preferably 28 MPa or lower, because such a cross-linked product is suitably used under high-temperature conditions. The tensile strength at break and the elongation at break are measured using #6 dumbbells in accordance with JIS-K 6251.

The cross-linked fluororubber product preferably has a tear strength at 160°C of 3 to 30 kN/m, further preferably 4 kN/m or higher, and particularly preferably 5 kN/m or higher, while preferably 29 kN/m or lower, and particularly preferably 28 kN/m or lower, because such a cross-linked product is suitably used under high-temperature conditions.

The cross-linked fluororubber product preferably has an elongation at break at 200°C of 100 to 700%, further preferably 110% or higher, and particularly preferably 120% or higher, while preferably 680% or lower, and particularly preferably 650% or lower, because such a cross-linked product is suitably used under high-temperature conditions.

The cross-linked fluororubber product preferably has a tensile strength at break at 200°C of 1 to 30 MPa, further

preferably 1.5 MPa or higher, and particularly preferably 2 MPa or higher, while preferably 29 MPa or lower, and particularly preferably 28 MPa or lower, because such a cross-linked product is suitably used under high-temperature conditions.

The cross-linked fluororubber product preferably has a tear strength at 200°C of 3 to 30 kN/m, further preferably 4 kN/m or higher, and particularly preferably 5 kN/m or higher, while preferably 29 kN/m or lower, and particularly preferably 28 kN/m or lower, because such a cross-linked product is suitably used under high-temperature conditions.

The cross-linked fluororubber product according to the present invention can be used for various applications, particularly suitably for the following applications and the like.

(1) Hose

The cross-linked fluororubber product can be used for a hose which may be a monolayer hose consisting of the cross-linked fluororubber product obtainable by cross-linking the fluororubber composition according to the present invention, or may be a multilayer hose having a laminated structure with other layers.

Examples of the monolayer hose include exhaust gas hoses, EGR hoses, turbo charger hoses, fuel hoses, brake hoses, and oil hoses.

Examples of the multilayer hose also include exhaust gas hoses, EGR hoses, turbo charger hoses, fuel hoses, brake hoses, and oil hoses.

Turbo systems are usually provided for diesel engines. In the turbo system, exhaust gas discharged from an engine is sent to a turbine so that the turbine is turned. Turning of the turbine drives a compressor coupled with the turbine, and the compressor increases the compression ratio of the air to be supplied to the engine; as a result, the output of power increases. The turbo system, which utilizes exhaust gas from an engine and generates a high power, contributes to downsizing of an engine, low fuel consumption of an automobile, and purification of exhaust gas.

A turbo charger hose is used in the turbo system as a hose for sending compressed air into the engine. In order to effectively use the limited engine-room space, a rubber hose which is excellent in flexibility and softness is advantageous. Typically used hoses have a multilayer structure that an inner layer comprises a rubber (especially a fluororubber) layer excellent in heat-aging resistance and oil resistance and an outer layer comprises a silicone rubber or an acrylic rubber. However, the conditions of the engine and its vicinities such as the engine room are severe due to high temperature and vibration. Thus, the hose requires not only excellent heat-aging resistance but also excellent mechanical properties at high temperatures.

A hose can satisfy these required characteristics at high levels using as a monolayer or multilayer rubber layer a cross-linked fluororubber layer obtainable by cross-linking the fluororubber composition according to the present invention, and thus provide a turbo charger hose having excellent characteristics.

In multilayer hoses other than the turbo charger hose, layers made of other materials may be layers made of other rubbers, thermoplastic resin layers, fiber-reinforced layers, and metal foil layers, for example.

In the case that chemical resistance and flexibility are particularly required, the other rubbers preferably include at least one selected from the group consisting of acrylonitrile-butadiene rubber and hydrogenated rubber thereof, rubber blend of acrylonitrile-butadiene rubber and polyvinyl chloride, fluororubber, epichlorohydrin rubber, EPDM, and acrylic rubber. They more preferably include at least one selected from the group consisting of acrylonitrile-butadiene rubber and hydrogenated rubber thereof, rubber blend of acrylonitrile-butadiene rubber and polyvinyl chloride, fluororubber, and epichlorohydrin rubber.

Further, the thermoplastic resin is preferably a thermoplastic resin comprising at least one selected from the group consisting of fluororesin, polyamide resin, polyolefin resin, polyester resin, polyvinyl alcohol resin, polyvinyl chloride resin, and polyphenylene sulfide resin. The thermoplastic resin is more preferably a thermoplastic resin comprising at least one selected from the group consisting of fluororesin, polyamide resin, polyvinyl alcohol resin, and polyphenylene sulfide resin.

In the case of forming a multilayer hose, surface treatment may be optionally performed. The surface treatment is not particularly limited as long as it allows bonding. Examples thereof include discharging treatment such as plasma discharge and corona discharge, and wet treatment such as treatment with a metallic sodium/naphthalene solution. Further, priming is suitable as surface treatment. Priming can be performed in accordance with a common method. In the case of priming, the surface of a fluororubber which is not surface-treated may be treated. Still, it is more effective to perform priming after prior treatment such as plasma discharge, corona discharge, or treatment with a metallic sodium/naphthalene solution.

Hoses produced from the cross-linked product according to the present invention may be suitably used in the following fields.

In the fields relating to semiconductor production, e.g. semiconductor producing devices, liquid crystal panel producing devices, plasma panel producing devices, plasma-addressed liquid crystal panels, field emission display panels, and solar battery substrates, the hose may be used as a hose for devices under high-temperature conditions such as CVD devices, dry etching devices, wet etching devices, oxidation/diffusion devices, sputtering devices, ashing

devices, washing devices, ion implanting devices, and gas discharging devices.

In the automobile field, the hose can be used as a hose in peripheral devices of engines and automatic transmissions, such as an EGR hose, an exhaust gas hose, a fuel hose, an oil hose, and a brake hose, as well as a turbo charger hose.

Furthermore, the hose can be used in the fields of aircraft, rockets and shipping, chemical plants, analysis/physical and chemical appliances, food plant appliances, nuclear plant appliances, and the like.

(2) Sealing material

The cross-linked fluororubber product according to the present invention can be suitably used as a sealing material in the following fields.

Sealing materials may be mentioned, for example, for automobiles, specifically in the engine body, main driving system, valve gear system, lubricant and cooling system, fuel system, and air intake and exhaust system, of the engine; the transmission of the drive system; the steering system of the chassis; the braking system; and the basic electrical components, controlling electrical components, and accessory electrical components. In such a field, the sealing material is required to have heat resistance, oil resistance, fuel oil resistance, engine antifreeze coolant resistance, and steam resistance. Examples of such a sealing material include gaskets and contact or non-contact packings (e.g. self-sealing packings, piston rings, split ring packings, mechanical seals, oil seals).

The sealing material used for the engine body of an automobile engine is not particularly limited, and examples thereof include cylinder head gaskets, cylinder head cover gaskets, oil pan packings, general gaskets, O-rings, packings, and timing belt cover gaskets.

Examples of the sealing material used for the main driving system of an automobile engine include, but not particularly limited to, shaft seals such as a crank shaft seal and a cam shaft seal.

Examples of the sealing material used for the valve gear system of an automobile engine include, but not particularly limited to, valve stem oil seals for an engine valve, and valve seats of a butterfly valve.

Examples of the sealing material used for the lubricant and cooling system of an automobile engine include, but not particularly limited to, seal gaskets for an engine oil cooler.

Examples of the sealing material used for the fuel system of an automobile engine include, but not particularly limited to, oil seals for a fuel pump, filler seals and tank packings for a fuel tank, connector O-rings for a fuel tube, injector cushion rings, injector seal rings, and injector O-rings for a fuel injection device, flange gaskets for a carburetor, and sealing materials for EGR.

Examples of the sealing material used for the air intake and exhaust system of an automobile engine include, but not particularly limited to, intake manifold packings and exhaust manifold packings for a manifold, throttle body packings for a throttle, and turbine shaft seals for a turbo charger.

Examples of the sealing material used for the transmission of an automobile include, but not particularly limited to, bearing seals, oil seals, O-rings, and packings for a transmission; and O-rings and packings for an automatic transmission.

Examples of the sealing material used for the braking system of an automobile include, but not particularly limited to, oil seals, O-rings, packings, piston cups (rubber cups) of master cylinders, caliper seals, and boots.

Examples of the sealing material used for the accessory electrical components of an automobile include, but not particularly limited to, O-rings and packings for a car air-conditioner.

The sealing material is particularly suitable as a sealing material (bush) for a sensor, and more suitable as a sealing material for an oxygen sensor, a sealing material for a nitrogen oxide sensor, and a sealing material for a sulfur oxide sensor. O-rings herein may be square rings.

The sealing material may be applied to any field other than the field of automobiles. The sealing material can be used in a wide range of fields such as fields of aircraft, rocket, shipping, oil well drilling (e.g. packer seal, seal for MWD, seal for LWD), chemical products (e.g. plants), medical products (e.g. drugs), photographing (e.g. developing machines), printing (e.g. printing machines), coating (e.g. coating facility), analysis/physical and chemical appliances, food plant appliances, nuclear plant appliances, steals (e.g. steel plate processing equipment), general industries, electrics, fuel cells, electronic components, and forming in place.

Examples of such a sealing material include packings, O-rings, and other sealing materials having oil resistance, chemical resistance, heat resistance, steam resistance or weather resistance in transportation facilities such as ships and boats, and aircrafts; similar packings, O-rings, and other sealing materials in oil well drilling; similar packings, O-rings, and other sealing materials in chemical plants; similar packings, O-rings, and other sealing materials in food plant appliances and food appliances (including household products); similar packings, O-rings, and other sealing materials in nuclear plant appliances; and similar packings, O-rings, and other sealing materials in general industrial components.

(3) Belt

The fluororubber formed product according to the present invention can be suitably used for the following belts.

That is, the cross-linked fluororubber product can be used for a belt of a power transmission belt (including flat belts, V belts, V-ribbed belts, and synchronous belts) or a belt for conveyance (conveyer belt). Further, in the fields relating to semiconductor production, e.g. semiconductor producing devices, liquid crystal panel producing devices, plasma panel producing devices, plasma-addressed liquid crystal panels, field emission display panels, and solar battery substrates, the cross-linked fluororubber product may be used for a belt for devices under high-temperature conditions such as CVD devices, dry etching devices, wet etching devices, oxidation/diffusion devices, sputtering devices, ashing devices, washing devices, ion implanting devices, and gas discharging devices.

Examples of the flat belt include flat belts for high-temperature components such as ones arranged around the engine of an agricultural machine, a machine tool, an industrial machine, or the like. Examples of the conveyer belt include conveyer belts for conveying bulks and granules such as coal, crushed stones, earth and sand, mineral, and wood chips at high temperatures; conveyer belts used in a blast furnace or the like in iron works or the like; and conveyer belts for use at high temperatures in a precision-instruments assembly plant, a food factory, or the like. Examples of the V belt and the V-ribbed belt include V belts and V-ribbed belts for agricultural machines, general machinery (e.g. OA equipment, printing machine, business-use drier), and automobiles. Examples of the synchronous belt include synchronous belts such as transmission belts of transfer robots, and transmission belts for food machines and machine tools; and synchronous belts for automobiles, OA equipment, medical use, and printing machines. Specific examples of the synchronous belt for an automobile include timing belts.

In multilayer belts, layers made of other materials may be layers made of other rubbers, thermoplastic resin layers, fiber-reinforced layers, canvas, and metal foil layers, for example.

In the case that chemical resistance and flexibility are particularly required, the other rubbers preferably include at least one selected from the group consisting of acrylonitrile-butadiene rubber and hydrogenated rubber thereof, rubber blend of acrylonitrile-butadiene rubber and polyvinyl chloride, fluororubber, epichlorohydrin rubber, EPDM, and acrylic rubber. They more preferably include at least one selected from the group consisting of acrylonitrile-butadiene rubber and hydrogenated rubber thereof, rubber blend of acrylonitrile-butadiene rubber and polyvinyl chloride, fluororubber, and epichlorohydrin rubber.

Further, the thermoplastic resin is preferably a thermoplastic resin comprising at least one selected from the group consisting of fluororesin, polyamide resin, polyolefin resin, polyester resin, polyvinyl alcohol resin, polyvinyl chloride resin, and polyphenylene sulfide resin. The thermoplastic resin is more preferably a thermoplastic resin comprising at least one selected from the group consisting of fluororesin, polyamide resin, polyvinyl alcohol resin, and polyphenylene sulfide resin.

In the case of forming a multilayer belt, surface treatment may be optionally performed. The surface treatment is not particularly limited as long as it allows bonding. Examples thereof include discharging treatment such as plasma discharge and corona discharge, and wet treatment such as treatment with a metallic sodium/naphthalene solution. Further, priming is suitable as surface treatment. Priming can be performed in accordance with a common method. In the case of priming, the surface of a fluororubber which is not surface-treated may be treated. Still, it is more effective to perform priming after prior treatment such as plasma discharge, corona discharge, or treatment with a metallic sodium/naphthalene solution.

(4) Vibration-proof rubber

The fluororubber formed product according to the present invention can satisfy the required characteristics of a vibration-proof rubber at high levels as its monolayer or multilayer rubber layer, and thus provide a vibration-proof rubber for automobiles which has excellent characteristics.

In multilayer vibration-proof rubbers other than the one for automobiles, layers made of other materials may be layers made of other rubbers, thermoplastic resin layers, fiber-reinforced layers, and metal foil layers, for example.

In the case that chemical resistance and flexibility are particularly required, the other rubbers preferably include at least one selected from the group consisting of acrylonitrile-butadiene rubber and hydrogenated rubber thereof, rubber blend of acrylonitrile-butadiene rubber and polyvinyl chloride, fluororubber, epichlorohydrin rubber, EPDM, and acrylic rubber. They more preferably include at least one selected from the group consisting of acrylonitrile-butadiene rubber and hydrogenated rubber thereof, rubber blend of acrylonitrile-butadiene rubber and polyvinyl chloride, fluororubber, and epichlorohydrin rubber.

Further, the thermoplastic resin is preferably a thermoplastic resin comprising at least one selected from the group consisting of fluororesin, polyamide resin, polyolefin resin, polyester resin, polyvinyl alcohol resin, polyvinyl chloride resin, and polyphenylene sulfide resin. The thermoplastic resin is more preferably a thermoplastic resin comprising at least one selected from the group consisting of fluororesin, polyamide resin, polyvinyl alcohol resin, and polyphenylene

sulfide resin.

In the case of forming a multilayer vibration-proof rubber, surface treatment may be optionally performed. The surface treatment is not particularly limited as long as it allows bonding. Examples thereof include discharging treatment such as plasma discharge and corona discharge, and wet treatment such as treatment with a metallic sodium/naphthalene solution. Further, priming is suitable as surface treatment. Priming can be performed in accordance with a common method. In the case of priming, the surface of a fluororubber which is not surface-treated may be treated. Still, it is more effective to perform priming after prior treatment such as plasma discharge, corona discharge, or treatment with a metallic sodium/naphthalene solution.

(5) Diaphragm

The fluororubber formed product of the present invention is suitable for the diaphragms described below.

Examples of the diaphragms include those for vehicle engines, specifically those used in the fuel system, exhaust system, braking system, drive system, and ignition system, which need to have heat resistance, oxidation resistance, fuel resistance, and low gas permeability.

Examples of the diaphragms used in the fuel system of a vehicle engine include: diaphragms for fuel pumps, diaphragms for carburetors, diaphragms for pressure regulators, diaphragms for pulsation dampers, diaphragms for ORVR, diaphragms for canisters, and diaphragms for auto fuel cocks.

Examples of the diaphragms used in the exhaust system of a vehicle engine include: diaphragms for waste gates, diaphragms for actuators, and diaphragms for EGR.

Examples of the diaphragms used in the braking system of a vehicle engine include diaphragms for air braking.

Examples of the diaphragms used in the drive system of a vehicle engine include diaphragms for oil pressure.

Examples of the diaphragms used in the ignition system of a vehicle engine include diaphragms for distributors.

Examples of the diaphragms in addition to those for vehicle engines includes: diaphragms for general pumps, diaphragms for valves, diaphragms for filter press, diaphragms for blower, diaphragms for air conditioners, diaphragms for control equipments, diaphragms for water supply, diaphragms for pumps transferring hot water used for hot-water supply and the like, diaphragms for high-temperature steam, diaphragms for semiconductor devices (for example, diaphragms for transferring chemicals used in a manufacturing process), diaphragms for food-processing devices, diaphragms for liquid storage tanks, diaphragms for pressure switches, diaphragms used oil exploration and oil drilling (for example, diaphragms for lubricant oil supply, such as oil drill bits ), diaphragms for gas appliances such as instantaneous gas water heaters and gas meters, diaphragms for accumulators, diaphragms for air springs such as suspensions, diaphragms for screw feeders for ships and boats, and diaphragms for medical artificial hearts, which need to have heat resistance, oil resistance, chemical resistance, steam resistance, and low gas permeability.

EXAMPLES

The present invention will be described referring to, the following examples.

Measurement methods of physical properties adopted in the present invention are as follows.

(1) Dynamic viscoelasticity test

(A) Dynamic viscoelasticity measurement before cross-linking (shear modulus G')

Measurement method of difference δG' (G'(1%) - G'(100%)) between shear modulus G'(1%) at 1% dynamic strain and shear modulus G'(100%) at 100% dynamic strain

The viscoelasticity is measured using a rubber process analyzer (model: RPA 2000) produced by Alpha Technologies at 100°C and 1 Hz.

(B) Dynamic viscoelasticity measurement of cross-linked product (storage modulus E' and loss modulus E")

Measurement device: dynamic viscoelasticity measurement device DVA-220 (IT Keisoku Seigyo K.K.)

Measurement conditions

Specimen: cross-linked rubber cuboid having a size of 3 mm in width x 2 mm in thickness
Measurement mode: tensile
Chuck distance: 20 mm
Measurement temperature: 160°C
Tensile strain: 1%
Initial force: 157 cN
Frequency: 10 Hz

(2) Tensile strength at break, elongation at break

The test devices to be used are RTA-1T produced by Orientec Co., Ltd. and AG-I produced by Shimadzu Corporation. The tensile strength at break and the elongation at break are measured using #6 dumbbells at a strain rate of 500 mm/min with a chuck distance of 50 mm in accordance with JIS-K 6251. The measuring temperatures are 25°C and 160°C.

(3) Mooney viscosity ($ML_{1+10}$(100°C))

The Mooney viscosity is determined in accordance with ASTM-D 1646 and JIS K 6300. The measurement temperature is 100°C.

In the examples, the following fluororubbers, carbon black, cross-linking agent, cross-linking accelerator, processing aid, and acid acceptor were used.

(Fluororubber A1)

A 3-L stainless steel autoclave was charged with 1.7 L of pure water, 0.17 g of a 50% aqueous solution of $CH_2=CFCF_2OCF(CF_3)CF_2OCF(CF_3)COONH_4$, and 6.8 g of a 50% aqueous solution of $F(CF_2)_5COONH_4$. Then, air in the system was sufficiently replaced with nitrogen gas. The content was heated to 80°C while stirring at 600 rpm. Then, monomers were fed thereinto under pressure so that an initial monomer composition was VdF/HFP = 34/66 mol% and the pressure was 1.52 MPa. Then, a polymerization initiator solution prepared by dissolving 60 mg of APS in 5 ml of pure water was fed under nitrogen gas pressure to initiate a reaction. With the progress of polymerization, the inside pressure fell to 1.42 MPa. At that time, a monomer mixture of VdF/HFP = 68/32 mol% was additionally fed to increase the inside pressure to 1.52 MPa. On that occasion, 1.96 g of a diiodinated compound $I(CF_2)_4I$ was fed to the autoclave under pressure. While such pressurization followed by pressure drop was repeated, an aqueous solution of 60 mg of APS in 5 ml of pure water was fed under nitrogen gas pressure at 3-hour intervals and the polymerization reaction was thus continued. After addition of a total of 600 g of the monomer mixture, unreacted monomers were discharged, the autoclave was cooled, and 617 g of dispersion of fluororubber with a solid matter concentration of 26.3% by mass was obtained. The polymerization time was 7.9 hours. The resulting fluororubber was examined by NMR analysis and found to have a copolymer composition of VdF/HFP = 68/32 (mol%) and a Mooney viscosity ($ML_{1+10}$ (100°C)) of 69. The fluororubber was called a fluororubber A1.

(Fluororubber A2)

A 3-L stainless steel autoclave was charged with 1.7 L of pure water, 0.17 g of a 50% aqueous solution of $CH_2=CFCF_2OCF(CF_3)CF_2OCF(CF_3)COONH_4$ and 6.8 g of a 50% aqueous solution of $F(CF_2)_5COONH_4$. Then, air in the system was sufficiently replaced with nitrogen gas. The content was heated to 80°C while stirring at 600 rpm. Then, monomers were fed thereinto under pressure so that an initial monomer composition was VdF/HFP = 45/55 mol% and the pressure was 1.52 MPa. Then, a polymerization initiator solution prepared by dissolving 60 mg of APS in 5 ml of pure water was fed under nitrogen gas pressure to initiate a reaction. With the progress of polymerization, the inside pressure fell to 1.42 MPa. At that time, a monomer mixture of VdF/HFP = 76/24 mol% was additionally fed to increase the inside pressure to 1.52 MPa. On that occasion, 1.96 g of a diiodinated compound $I(CF_2)_4I$ was fed to the autoclave under pressure. While such pressurization followed by pressure drop was repeated, an aqueous solution of 60 mg of APS in 5 ml of pure water was fed under nitrogen gas pressure at 3-hour intervals and the polymerization reaction was thus continued. After addition of a total of 600 g of the monomer mixture, unreacted monomers were discharged, the autoclave was cooled, and 628 g of dispersion of fluororubber with a solid matter concentration of 26.6% by mass was obtained. The polymerization time was 7.5 hours. The resulting fluororubber was examined by NMR analysis and found to have a copolymer composition of VdF/HFP = 76/24 (mol%) and a Mooney viscosity ($ML_{1+10}$ (100°C)) of 89. The fluororubber was called a fluororubber A2.

(Fluororubber A3)

A 3-L stainless steel autoclave was charged with 1.7 L of pure water, 0.17 g of a 50% aqueous solution of $CH_2=CFCF_2OCF(CF_3)CF_2OCF(CF_3)COONH_4$, and 6.8 g of a 50% aqueous solution of $F(CF_2)_5COONH_4$. Then, air in the system was sufficiently replaced with nitrogen gas. The content was heated to 80°C while stirring at 600 rpm. Then, monomers were fed thereinto under pressure so that an initial monomer composition was VdF/HFP = 59/41 mol% and the pressure was 1.52 MPa. Then, a polymerization initiator solution prepared by dissolving 60 mg of APS in 5 ml of pure water was fed under nitrogen gas pressure to initiate a reaction. With the progress of polymerization, the inside pressure fell to 1.42 MPa. At that time, a monomer mixture of VdF/HFP = 84/16 mol% was additionally fed to increase the inside pressure to 1.52 MPa. On that occasion, 1.96 g of a diiodinated compound $I(CF_2)_4I$ was fed to the autoclave under pressure. While such pressurization followed by pressure drop was repeated, an aqueous solution of 60 mg of APS in 5 ml of pure water was fed under nitrogen gas pressure at 3-hour intervals and the polymerization reaction was thus continued. After addition of a total of 600 g of the monomer mixture, unreacted monomers were discharged, the autoclave was cooled, and 628 g of dispersion of fluororubber with a solid matter concentration of 26.7% by mass was obtained. The polymerization time was 7.4 hours. The resulting fluororubber was examined by NMR analysis and found to have a copolymer composition of VdF/HFP = 84/16 (mol%) and a Mooney viscosity ($ML_{1+10}$ (100°C)) of 93. The fluororubber was called a fluororubber A3.

(Fluororubber A4)

A 3-L stainless steel autoclave was charged with 1.7 L of pure water, 0.17 g of a 50% aqueous solution of $CH_2=CFCF_2OCF(CF_3)CF_2OCF(CF_3)COONH_4$, and 6.8 g of a 50% aqueous solution of $F(CF_2)_5COONH_4$. Then, air in the system was sufficiently replaced with nitrogen gas. The content was heated to 80°C while stirring at 600 rpm. Then, monomers were fed thereinto under pressure so that an initial monomer composition was VdF/PMVE = 68/32 mol% and the pressure was 1.52 MPa. Then, a polymerization initiator solution prepared by dissolving 30 mg of APS in 5 ml of pure water was fed under nitrogen gas pressure to initiate a reaction. With the progress of polymerization, the inside pressure fell to 1.42 MPa. At that time, a monomer mixture of VdF/PMVE = 67/33 mol% was additionally fed to increase the inside pressure to 1.52 MPa. On that occasion, 2.72 g of a diiodinated compound $I(CF_2)_4I$ was fed to the autoclave under pressure. While such pressurization followed by pressure drop was repeated, an aqueous solution of 30 mg of APS in 5 ml of pure water was fed under nitrogen gas pressure at 3-hour intervals and the polymerization reaction was thus continued. After addition of a total of 600 g of the monomer mixture, unreacted monomers were discharged, the autoclave was cooled, and 610 g of dispersion of fluororubber with a solid matter concentration of 27.0% by mass was obtained. The polymerization time was 6.4 hours. The resulting fluororubber was examined by NMR analysis and found to have a copolymer composition of VdF/PMVE = 71/29 (mol%) and a Mooney viscosity ($ML_{1+10}$ (100°C)) of 45. The fluororubber was called a fluororubber A4.

(Fluororubber A5)

A 3-L stainless steel autoclave was charged with 1.7 L of pure water, 0.17 g of a 50% aqueous solution of $CH_2=CFCF_2OCF(CF_3)CF_2OCF(CF_3)COONH_4$, and 6.8 g of a 50% aqueous solution of $F(CF_2)_5COONH_4$. Then, air in the system was sufficiently replaced with nitrogen gas. The content was heated to 80°C while stirring at 600 rpm. Then, monomers were fed thereinto under pressure so that an initial monomer composition was VdF/PMVE = 77/23 mol% and the pressure was 1.52 MPa. Then, a polymerization initiator solution prepared by dissolving 30 mg of APS in 5 ml of pure water was fed under nitrogen gas pressure to initiate a reaction. With the progress of polymerization, the inside pressure fell to 1.42 MPa. At that time, a monomer mixture of VdF/PMVE = 76/24 mol% was additionally fed to increase the inside pressure to 1.52 MPa. On that occasion, 2.72 g of a diiodinated compound $I(CF_2)_4I$ was fed to the autoclave under pressure. While such pressurization followed by pressure drop was repeated, an aqueous solution of 30 mg of APS in 5 ml of pure water was fed under nitrogen gas pressure at 3-hour intervals and the polymerization reaction was thus continued. After addition of a total of 600 g of the monomer mixture, unreacted monomers were discharged, the autoclave was cooled, and 618 g of dispersion of fluororubber with a solid matter concentration of 26.3% by mass was obtained. The polymerization time was 6.5 hours. The resulting fluororubber was examined by NMR analysis and found to have a copolymer composition of VdF/PMVE = 79/21 (mol%) and a Mooney viscosity ($ML_{1+10}$ (100°C) ) of 60. The fluororubber was called a fluororubber A5.

(Fluororubber A6)

A 3-L stainless steel autoclave was charged with 1.7 L of pure water, 0.17 g of a 50% aqueous solution of $CH_2=CFCF_2OCF(CF_3)CF_2OCF(CF_3)$ $COONH_4$, and 6.8 g of a 50% aqueous solution of $F(CF_2)_5COONH_4$. Then, air in

the system was sufficiently replaced with nitrogen gas. The content was heated to 80°C while stirring at 600 rpm. Then, monomers were fed thereinto under pressure so that an initial monomer composition was VdF/PMVE = 84/16 mol% and the pressure was 1.52 MPa. Then, a polymerization initiator solution prepared by dissolving 30 mg of APS in 5 ml of pure water was fed under nitrogen gas pressure to initiate a reaction. With the progress of polymerization, the inside pressure fell to 1.42 MPa. At that time, a monomer mixture of VdF/PMVE = 84/16 mol% was additionally fed to increase the inside pressure to 1.52 MPa. On that occasion, 2.72 g of a diiodinated compound $I(CF_2)_4I$ was fed to the autoclave under pressure. While such pressurization followed by pressure drop was repeated, an aqueous solution of 30 mg of APS in 5 ml of pure water was fed under nitrogen gas pressure at 3-hour intervals and the polymerization reaction was thus continued. After addition of a total of 600 g of the monomer mixture, unreacted monomers were discharged, the autoclave was cooled, and 614 g of dispersion of fluororubber with a solid matter concentration of 26.3% by mass was obtained. The polymerization time was 8.1 hours. The resulting fluororubber was examined by NMR analysis and found to have a copolymer composition of VdF/PMVE = 85/15 (mol%) and a Mooney viscosity ($ML_{1+10}$ (100°C)) of 72. The fluororubber was called a fluororubber A6.

(Fluororubber A7)

A 3-L stainless steel autoclave was charged with 1.7 L of pure water, 0.17 g of a 50% aqueous solution of $CH_2=CFCF_2OCF(CF_3)CF_2OCF(CF_3)COONH_4$, and 6.8 g of a 50% aqueous solution of $F(CF_2)_5COONH_4$. Then, air in the system was sufficiently replaced with nitrogen gas. The content was heated to 80°C while stirring at 600 rpm. Then, monomers were fed thereinto under pressure so that an initial monomer composition was VdF/HFP/TFE = 59/35/6 mol% and the pressure was 1.52 MPa. Then, a polymerization initiator solution prepared by dissolving 60 mg of APS in 5 ml of pure water was fed under nitrogen gas pressure to initiate a reaction. With the progress of polymerization, the inside pressure fell to 1.42 MPa. At that time, a monomer mixture of VdF/HFP/TFE = 72/21/7 mol% was additionally fed to increase the inside pressure to 1.52 MPa. On that occasion, 1.95 g of a diiodinated compound $I(CF_2)_4I$ was fed to the autoclave under pressure. While such pressurization followed by pressure drop was repeated, an aqueous solution of 60 mg of APS in 5 ml of pure water was fed under nitrogen gas pressure at 3-hour intervals and the polymerization reaction was thus continued. After addition of a total of 600 g of the monomer mixture, unreacted monomers were discharged, the autoclave was cooled, and 623 g of dispersion of fluororubber with a solid matter concentration of 26.7% by mass was obtained. The polymerization time was 6.2 hours. The resulting fluororubber was examined by NMR analysis and found to have a copolymer composition of VdF/HFP/TFE = 72/21/7 (mol%) and a Mooney viscosity ($ML_{1+10}$ (100°C)) of 63. The fluororubber was called a fluororubber A7.

(Carbon black)

ISAF ($N_2SA$ = 119 $m^2/g$, DBP oil absorption = 114 ml/100 g), "SEAST 6" (product name) product of Tokai Carbon Co., Ltd.

(Cross-linking agent)

2,5-dimethy-2,5-di(t-butylperoxy)hexane, "PERHEXA 25B" (product name) product of NOF Corporation

(Cross-linking accelerator)

Triallyl isocyanurate (TAIC), "TAIC" (product name) product of Nippon Kasei Chemical Company Limited

(Processing aid)

Stearylamine (FARMIN 86T) (product of Kao Corporation)

(Acid acceptor)

Zinc oxide (#1) (product of Sakai Chemical Industry Co., Ltd.)

Example 1

An amount of 100 parts by mass of the fluororubber (A1) was mixed with 20 parts by mass of the carbon black, 0.5 parts by mass the stearylamine, and 1.0 part by mass of the zinc oxide using a mixer (MixLabo 0.5 L, product of MORIYAMA COMPANY LTD., Rotor diameter: 6.6 cm, chip clearance: 0.05 cm) under the mixing conditions of front rotor speed of 60 rpm and back rotor speed of 50 rpm. Thereby, a fluororubber precompound (B1) was prepared. The maximum temperature (Tm) of the discharged mixed product was 165°C.

The resulting fluororubber precompound (B1) was subjected to the dynamic viscoelasticity test (1)-(A), and thereby the $\delta G'$ was determined. Table 1 shows the results.

Then, 121.5 parts by mass of the fluororubber precompound (B1) was mixed with 1.0 part by mass of the cross-linking agent, 0.5 parts by mass of the cross-linking accelerator (TAIC), and 0.5 parts by mass of the stearylamine for 30 minutes using an 8-inch open roll mixer (product of KANSAI ROLL Co., Ltd.) under the mixing conditions of front roll speed of 21 rpm, back roll speed of 19 rpm, and gap distance between rolls of 0.1 cm. Thereby, a fluororubber full compound (C1) was prepared. The maximum temperature of the discharged mixed product was 70°C.

The fluororubber full compound (C1) was pressed and cross-linked at 160°C for 30 minutes to prepare a 2-mm-thick sheet specimen. A specimen to be examined was prepared from the sheet specimen, and it was examined for tensile strength at break and elongation at break. Table 1 shows the results.

The resulting cross-linked fluororubber was subjected to the dynamic viscoelasticity test (1)-(B), and the loss modulus E" and the storage modulus E' were determined. Table 1 shows the results.

Example 2

Mixing was carried out under the same conditions as those for Example 1, except that the fluororubber (A2) was used instead of the fluororubber (A1) and a cross-linked sheet was prepared in the same way as in Example 1. Various physical properties were determined in the same way as in Example 1. Table 1 shows the results.

Example 3

Mixing was carried out under the same conditions as those for Example 1, except that the fluororubber (A3) was used instead of the fluororubber (A1), and a cross-linked sheet was prepared in the same way as in Example 1. Various physical properties were determined in the same way as in Example 1. Table 1 shows the results.

Example 4

Mixing was carried out under the same conditions as those for Example 1, except that the fluororubber (A4) was used instead of the fluororubber (A1), and a cross-linked sheet was prepared in the same way as in Example 1. Various physical properties were determined in the same way as in Example 1. Table 1 shows the results.

Example 5

Mixing was carried out under the same conditions as those for Example 1, except that the fluororubber (A5) was used instead of the fluororubber (A1), and a cross-linked sheet was prepared in the same way as in Example 1. Various physical properties were determined in the same way as in Example 1. Table 1 shows the results.

Example 6

Mixing was carried out under the same conditions as those for Example 1, except that the fluororubber (A6) was used instead of the fluororubber (A1), and a cross-linked sheet was prepared in the same way as in Example 1. Various physical properties were determined in the same way as in Example 1. Table 1 shows the results.

Example 7

Mixing was carried out under the same conditions as those for Example 1, except that the fluororubber (A7) was used instead of the fluororubber (A1), and a cross-linked sheet was prepared in the same way as in Example 1. Various physical properties were determined in the same way as in Example 1. Table 1 shows the results.

[Table 1]

| | Example 1 | Example 2 | Example 3 | Example 4 | Example 5 | Example 6 | Example 7 |
|---|---|---|---|---|---|---|---|
| Fluororubber precompound (part by mass) | | | | | | | |
| Fluororubber (A1) | 100 | | | | | | |
| Fluororubber (A2) | | 100 | | | | | |
| Fluororubber(A3) | | | 100 | | | | |
| Fluororubber (A4) | | | | 100 | | | |
| Fluororubber (A5) | | | | | 100 | | |
| Fluororubber (A6) | | | | | | 100 | |
| Fluororubber (A7) | | | | | | | 100 |
| Carbon black | 20 | 20 | 20 | 20 | 20 | 20 | 20 |
| Zinc oxide | 1.0 | 1.0 | 1.0 | 1.0 | 1.0 | 1.0 | 1.0 |
| Stearylamine | 0.5 | 0.5 | 0.5 | 0.5 | 0.5 | 0.5 | 0.5 |
| Maximum temperature of discharged mixed product (°C) | 165 | 169 | 166 | 159 | 161 | 163 | 163 |
| Dynamic viscoelasticity test ((1)-(A) 160°C) $\delta$G'(kPa) | 568 | 574 | 523 | 468 | 467 | 445 | 425 |
| Fluororubber full compound (part by mass) | | | | | | | |
| Fluororubber precompound (B1) | 121.5 | | | | | | |
| Fluororubber precompound (B2) | | 121.5 | | | | | |
| Fluororubber precompound (B3) | | | 121.5 | | | | |
| Fluororubber precompound (B4) | | | | 121.5 | | | |
| Fluororubber precompound (B5) | | | | | 121.5 | | |
| Fluororubber precompound (B6) | | | | | | 121.5 | |
| Fluororubber precompound (B7) | | | | | | | 121.5 |
| TAIC | 0.5 | 0.5 | 0.5 | 0.5 | 0.5 | 0.5 | 0.5 |
| Cross-linking agent | 1.0 | 1.0 | 1.0 | 1.0 | 1.0 | 1.0 | 1.0 |
| Stearylamine | 0.5 | 0.5 | 0.5 | 0.5 | 0.5 | 0.5 | 0.5 |
| Maximum temperature of discharged mixed product (°C) | 70 | 71 | 74 | 68 | 72 | 75 | 75 |
| Press cross-linking conditions | 160°C 30min | 160°C 30mm | 160°C 30min | 160°C 30min | 160°C 30min | 160°C 30min | 160°C 30min |

(continued)

| | Example 1 | Example 2 | Example 3 | Example 4 | Example 5 | Example 6 | Example 7 |
|---|---|---|---|---|---|---|---|
| Mechanical properties of cross-linked product | | | | | | | |
| Measurement temperature 25°C | | | | | | | |
| Tensile strength at break (MPa) | 15.7 | 20.1 | 22.0 | 15.6 | 19.3 | 25.5 | 22.4 |
| Elongation at break (%) | 742 | 763 | 599 | 569 | 589 | 505 | 650 |
| Measurement temperature 160°C | | | | | | | |
| Tensile strength at break (MPa) | 3.1 | 3.9 | 4.3 | 3.6 | 2.9 | 3.9 | 4.1 |
| Elongation at break (%) | 440 | 438 | 405 | 274 | 237 | 335 | 370 |
| Dynamic viscoelasticity test ((1)-(B) 160°C) | | | | | | | |
| Storage modulus E' (kPa) | 4745 | 5192 | 5148 | 6886 | 6810 | 5921 | 6521 |
| Loss modulus E" (kPa) | 1213 | 1269 | 1209 | 1464 | 1450 | 1303 | 1348 |

## Claims

1. A formed product comprising a cross-linked fluororubber product obtainable by cross-linking a fluororubber composition containing

    (i) a vinylidene fluoride (VdF) fluororubber (A) including, per 100 mol-% of structural units derived from all monomer components,

    - 48-88 mol-% of structural units derived from VdF,
    - 0-10 mol-% of structural units derived from tetrafluoroethylene (TFE), and
    - 2-52 mol-% of structural units derived from monomers other than VdF and TFE, which other monomers are selected from hexafluoropropylene (HFP), perfluoro(alkyl vinyl ether) (PAVE), and compounds of the formula $CH_2$=CF-Rf (1) wherein Rf is linear or branched $C_{1-12}$-fluoroalkyl;

    (ii) a carbon black (B) having a nitrogen adsorption specific surface area ($N_2SA$) of 10-180 $m^2/g$; and
    (iii) a crosslinking agent for a peroxide cross-link system (C);

    the cross-linked fluororubber product having a loss modulus E" of 400-6,000 kPa determined by a dynamic viscoelasticity test at a measurement temperature of 160°C, a tensile strain of 1%, an initial force of 157 cN and a frequency of 10 Hz.

2. The formed product of claim 1, wherein the cross-linked fluororubber product has a storage modulus E' of 1,500-20,000 kPa determined by the dynamic viscoelasticity test defined in claim 1.

3. The formed product of claim 1 or 2, wherein the fluororubber composition contains 5-65 pbw of the carbon black (B) per 100 pbw of the fluororubber (A).

4. The formed product of any of claims 1-3, wherein the carbon black (B) has a nitrogen adsorption specific surface area ($N_2SA$) of 10-180 $m^2/g$ and a dibutyl phthalate (DBP) oil absorption of 40-180 ml/100 g.

**5.** A fluororubber composition comprising:

(i) a vinylidene fluoride (VdF) fluororubber (A) including, per 100 mol-% of structural units derived from all monomer components,

- 48-88 mol-% of structural units derived from VdF,
- 0-10 mol-% of structural units derived from tetrafluoroethylene (TFE), and
- 2-52 mol-% of structural units derived from monomers other than VdF and TFE, which other monomers are selected from hexafluoropropylene (HFP), perfluoro(alkyl vinyl ether) (PAVE), and compounds of the formula $CH_2$=CF-Rf (1) wherein Rf is linear or branched $C_{1-12}$-fluoroalkyl;

(ii) a carbon black (B) having a nitrogen adsorption specific surface area ($N_2SA$) of 10-180 $m^2/g$; and
(iii) a crosslinking agent for a peroxide cross-link system (C);

the fluororubber composition before cross-linking has a difference $\delta G' = G'(1\%) - G'(100\%)$ of 120-3,000 kPa, wherein G'(100%) is the shear modulus at 100% dynamic strain and G' (1%) is the shear modulus at 1% dynamic strain, each determined in a dynamic viscoelasticity test with a rubber process analyzer (RPA) at a measurement frequency of 1 Hz and a measurement temperature of 100°C.

**6.** The fluororubber composition of claim 5, which comprises 5-65 pbw of the carbon black (B) per 100 pbw of the fluororubber (A).

**7.** The fluororubber composition of claim 5 or 6, wherein the carbon black (B) has a $N_2SA$ of 10-180 $m^2/g$ and a dibutyl phthalate (DBP) oil absorption of 40-180 ml/100 g.

**Patentansprüche**

**1.** Formprodukt, umfassend ein vernetztes Fluorkautschuk-Produkt, erhältlich durch Vernetzen einer Fluorkautschukzusammensetzung, enthaltend:

(i) einen Vinylidenfluorid (VdF)-Fluorkautschuk (A), der pro 100 mol-% Struktureinheiten, die von allen Monomerkomponenten abgeleitet sind,

- 48 bis 88 mol-% von VdF abgeleitete Struktureinheiten,
- 0 bis 10 mol-% von Tetrafluorethylen (TFE) abgeleitete Stuktureinheiten und
- 2 bis 52 mol-% von anderen Monomeren als VdF und TFE abgeleitete Struktureinheiten, wobei die anderen Monomere aus Hexafluorpropylen (HFP), Perfluor(alkylvinylether) (PAVE) und Verbindungen der Formel $CH_2$=CF-Rf (1) ausgewählt sind, worin Rf geradkettiges oder verzweigtes $C_{1-12}$-Fluoralkyl ist,

einschliesst;
(ii) Russ (B) mit einer durch Stickstoffadsorption gemessenen spezifischen Oberfläche ($N_2SA$) von 10 bis 180 $m^2/g$; und
(iii) ein Vernetzungsmittel für ein Peroxid-Vernetzungssystem (C);

wobei das vernetzte Fluorkautschuk-Produkt einen Verlustmodul E" von 400 bis 6.000 kPa, bestimmt durch einen dynamischen Viskoelastizitätstest bei einer Messtemperatur von 160°C, einer Zugbelastung von 1 %, einer Anfangskraft von 157 cN und einer Frequenz von 10 Hz, aufweist.

**2.** Formprodukt gemäss Anspruch 1, wobei das vernetzte Fluorkautschuk-Produkt einen Speichermodul E' von 1.500 bis 20.000 kPa, bestimmt durch einen dynamischen Viskoelastizitätstest wie in Anspruch 1 definiert, aufweist.

**3.** Formprodukt gemäss Anspruch 1 oder 2, wobei die Fluorkautschuk-Zusammensetzung 5 bis 65 Gew.-Teile Russ (B) pro 100 Gew.-Teile Fluorkautschuk (A) enthält.

**4.** Formprodukt gemäss einem der Ansprüche 1 bis 3, wobei der Russ (B) eine durch Stickstoffadsorption gemessene spezifische Oberfläche ($N_2SA$) von 10 bis 180 $m^2/g$ und eine Dibutylphthalat (DBP)-Ölabsorption von 40 bis 180 ml/100 g aufweist.

**5.** Fluorkautschuk-Zusammensetzung, umfassend:

(i) einen Vinylidenfluorid (VdF)-Fluorkautschuk (A) der pro 100 mol-% Struktureinheiten, die von allen Monomerkomponenten abgeleitet sind,

- 48 bis 88 mol-% von VdF abgeleitete Struktureinheiten,
- 0 bis 10 mol-% von Tetrafluorethylen (TFE) abgeleitete Stuktureinheiten und
- 2 bis 52 mol-% von anderen Monomeren als VdF und TFE abgeleitete Struktureinheiten, wobei die anderen Monomere aus Hexafluorpropylen (HFP), Perfluor(alkylvinylether) (PAVE) und Verbindungen der Formel $CH_2$=CF-Rf (1) ausgewählt sind, worin Rf geradkettiges oder verzweigtes $C_{1-12}$-Fluoralkyl ist,

einschliesst;
(ii) Russ (B) mit einem spezifischen, Stickstoff adsorbierenden Oberflächenbereich ($N_2SA$) von 10 bis 180 $m^2$/g; und
(iii) ein Vernetzungsmittel für ein Peroxid-Vernetzungssystem (C);

wobei die Fluorkautschuk-Zusammensetzung vor der Vernetzung eine Differenz $\delta G'$ = G'(1 %)-G'(100 %) von 120 bis 3.000 kPa aufweist, worin G'(100 %) das Schubmodul bei 100 % dynamischer Dehnung ist und G'(1 %) das Schubmodul bei 1 % dynamischer Dehnung ist, jeweils bestimmt in einem dynamischen Viskoelastizitätstest mit einem Rubber Process Analyzer (RPA) bei einer Messfrequenz von 1 Hz und einer Messtemperatur von 100°C.

**6.** Fluorkautschuk-Zusammensetzung gemäss Anspruch 5, die 5 bis 65 Gew.-Teile Russ (B) pro 100 Gew.-Teile des Fluorkautschuks (A) umfasst.

**7.** Fluorkautschuk-Zusammensetzung gemäss Anspruch 5 oder 6, wobei der Russ (B) ein ($N_2SA$) von 10 bis 180 $m^2$/g und eine Dibutylphthalat (DBP)-Ölabsorption von 40 bis 180 ml/100 g aufweist.

## Revendications

**1.** Produit façonné comprenant un produit de caoutchouc fluoré réticulé pouvant être obtenu par réticulation d'une composition de caoutchouc fluoré contenant

(i)un caoutchouc fluoré (A) de fluorure de vinylidène (VdF) comportant, pour 100 % en mole de motifs structuraux dérivés de tous les composants monomères,

- 48 à 88 % en mole de motifs structuraux dérivés de VdF,
- 0 à 10 % en mole de motifs structuraux dérivés de tétrafluoroéthylène (TFE) et
- 2 à 52 % en mole de motifs structuraux dérivés de monomères autres que le VdF et le TFE, lesquels autres monomères sont choisis parmi l'hexafluoropropylène (HFP), le perfluoro(alkylvinyléther) (PAVE) et des composés de formule $CH_2$=CF-Rf (1), dans lequel Rf est un groupe fluoroalkyle en $C_1$ à $C_{12}$ linéaire ou ramifié ;

(ii) un noir de carbone (B) ayant une surface spécifique d'adsorption d'azote ($N_2SA$) de 10 à 180 $m^2$/g; et
(iii) un agent de réticulation pour un système de réticulation de peroxyde (C) ; le produit de caoutchouc fluoré réticulé ayant un module de perte E" de 400 à 6000 kPa déterminé par un test de viscoélasticité dynamique à une température de mesure de 160 °C, une contrainte de traction de 1 %, une force initiale de 157 cN et une fréquence de 10 Hz.

**2.** Produit façonné selon la revendication 1, dans lequel le produit de caoutchouc fluoré réticulé a un module de conservation E' de 1500 à 20 000 kPa déterminé par le test de viscoélasticité dynamique défini dans la revendication 1.

**3.** Produit façonné selon la revendication 1 ou 2, dans lequel la composition de caoutchouc fluoré contient 5 à 65 parties en poids de noir de carbone (B) pour 100 parties en poids du caoutchouc fluoré (A).

**4.** Produit façonné selon l'une quelconque des revendications 1 à 3, dans lequel le noir de carbone (B) a une surface spécifique d'adsorption d'azote ($N_2SA$) de 10 à 180 $m^2$/g et une absorption d'huile de phtalate de dibutyle (DBP)

de 40 à 180 ml/100 g.

**5.** Composition de caoutchouc fluoré comprenant :

(i) un caoutchouc fluoré (A) de fluorure de vinylidène (VdF) comportant, pour 100 % en mole de motifs structuraux dérivés de tous les composants monomères,

- 48 à 88 % en mole de motifs structuraux dérivés de VdF,
- 0 à 10 % en mole de motifs structuraux dérivés de tétrafluoroéthylène (TFE), et
- 2 à 52 % en mole de motifs structuraux dérivés de monomères autres que le VdF et le TFE, lesquels autres monomères sont choisis parmi l'hexafluoropropylène (HFP), le perfluoro(alkylvinyléther) (PAVE) et des composés de formule $CH_2$=CF-Rf (1), dans lequel Rf est un groupe fluoroalkyle en $C_1$ à $C_{12}$ linéaire ou ramifié ;

(ii) un noir de carbone (B) ayant une surface spécifique d'adsorption d'azote ($N_2SA$) de 10 à 180 $m^2$/g ; et
(iii) un agent de réticulation pour un système de réticulation de peroxyde (C) ;

la composition de caoutchouc fluoré avant la réticulation ayant une différence $\delta G'$ = G' (1 %) - G' (100 %) de 120 à 3000 kPa, dans lequel G' (100 %) est le module de cisaillement sous une contrainte dynamique de 100 % et G' (1 %) est le module de cisaillement sous une contrainte dynamique de 1 %, chacun étant déterminé dans un test de viscoélasticité dynamique avec un analyseur de traitement du caoutchouc (RPA) à une fréquence de mesure de 1 Hz et une température de mesure de 100 °C.

**6.** Composition de caoutchouc fluoré selon la revendication 5, qui comprend 5 à 65 parties en poids de noir de carbone (B) pour 100 parties en poids de caoutchouc fluoré (A).

**7.** Composition de caoutchouc fluoré selon la revendication 5 ou 6, dans laquelle le noir de carbone (B) a une valeur $N_2SA$ de 10 à 180 $m^2$/g et une absorption d'huile de phtalate de dibutyle (DBP) de 40 à 180 ml/100 g.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0743329 A1
- JP 60055050 A
- JP 2008184496 A
- JP H0625500 A